## Europäisches Patentamt

## European Patent Office

## Office européen des brevets

(11) Veröffentlichungsnummer : **0 071 107**
**B1**

(12) **EUROPÄISCHE PATENTSCHRIFT**

(45) Veröffentlichungstag der Patentschrift :
09.01.85

(21) Anmeldenummer : 82106374.0

(22) Anmeldetag : 15.07.82

(51) Int.Cl.⁴ : **H 05 B   7/14**

(54) **Vorrichtung zum Annippeln einer Graphitelektrode an eine Dauerelektrode eines Elektroofens.**

(30) Priorität : 28.07.81 DE 3129602

(43) Veröffentlichungstag der Anmeldung :
09.02.83 Patentblatt 83/06

(45) Bekanntmachung des Hinweises auf die Patenterteilung : 09.01.85 Patentblatt 85/02

(84) Benannte Vertragsstaaten :
**FR GB IT NL**

(56) Entgegenhaltungen :
**CH-A-   355 539**
**DE-A- 2 312 968**
**DE-A- 2 338 741**
**DE-A- 2 739 483**
**DE-C-   489 475**
**DE-C-   976 617**
**US-A- 2 322 918**
**US-A- 2 982 804**

(73) Patentinhaber : **Fuchs Systemtechnik GmbH**
**Reithallenstrasse 1**
**D-7601 Willstätt-Legelshurst (DE)**

(72) Erfinder : **Fuchs, Gerhard**
**Eschigweg 1**
**D-7640 Kehl-Bodersweier (DE)**

(74) Vertreter : **Blumbach Weser Bergen Kramer Zwirner**
**Hoffmann Patentanwälte·**
**Radeckestrasse 43**
**D-8000 München 60 (DE)**

## Beschreibung

Die Erfindung bezieht sich auf eine Vorrichtung zum Annippeln einer Graphitelektrode an eine Dauerelektrode eines Elektroofens gemäß der Gattung des Anspruchs 1. Die Graphitelektrode und die Dauerelektrode machen zusammen eine eigentliche Elektrode des Elektroofens aus, die man auch als Verbundelektrode bezeichnen könnte.

Bei konventionellen Elektroöfen durchsetzen die aus mindestens zwei Abschnitten bestehenden, mittels Schraubnippeln aus Kohle oder Graphit axial aufeinanderfolgend zusammengeschraubten Graphitelektroden den Ofendeckel nach oben und werden von einer darüber befindlichen Haltevorrichtung aus entsprechend ihrem Abbrand schrittweise nach unten in den Ofen abgesenkt.

Nach einer entsprechenden Kürzung muß an das obere Ende der in einer Einspannvorrichtung gehaltenen Graphitelektrode über einen aufgeschraubten Kohle- oder Graphitnippel ein neues Teilstück angeschraubt werden. Da auch schon ein übliches Teilstück einer aus Graphit, Kohle od. dgl. bestehenden Elektrode für heute übliche Elektroöfen mehrere Meter lang ist und ein beträchtliches Gewicht besitzt, sind für das genannte Annippeln von oben her bereits verschiedene Annippelvorrichtungen vorgeschlagen worden (z. B. DE-A 23 12 968) die dazu dienen, ein neues Teilstück der Elektrode oberhalb des Elektroofens an die eingespannte Graphitelektrode anzuschrauben.

Unbefriedigend ist bei den vorgenannten konventionellen Elektroöfen jedoch, daß die aus mehreren Teilstücken zusammengesetzten Elektroden verhältnismäßig stark erosions- und bruchempfindlich sind und durch vorkommende Elektrodenbrüche nicht unerhebliche Zeit- und Materialverluste eintreten. Man ist deshalb seit kurzem dazu übergegangen (vgl. z. B. DE-A 27 39 384), das aus dem Elektroofen nach oben herausragende, in der Tragvorrichtung gehaltene und oben an eine Stromquelle angeschlossene Ende der Elektrode als Dauerelektrode aus Kupfer oder einem ähnlich gut leitenden Metall herzustellen und durch ein Kühlmittel, z. B. einen Wasserkreislauf, zu kühlen. Das in den Elektroofen hineinragende untere Ende der Dauerelektrode ist als Schraubnippel ausgebildet, an den sodann lediglich ein Teilstück einer üblichen Graphitelektrode angeschraubt zu werden braucht. Schon durch die metallische Ausbildung des oberen, in der Tragvorrichtung eingespannten Teiles der Elektrode ergibt sich dabei eine wesentliche Verringerung der Erosions- und Bruchgefahr. Nachteilig ist indessen gegenüber den früher üblichen Graphitelektroden, daß das Annippeln nicht mehr von oben her erfolgen kann und somit auch die bekannten Annippelvorrichtungen nicht verwendet werden können. Da das untere Elektrodenende während der kurzen Zeit eines Chargenwechsels im übrigen sehr hohe Temperaturen beibehält, hat man bisher keine Möglichkeit gesehen, das Annippeln eines neuen Teilstückes einer Graphitelektrode an eine unmittelbar zuvor benutzte Dauerelektrode — etwa während der kurzen Zeit eines Chargenwechsels — durchzuführen. Man mußte vielmehr die vorher benutzte Dauerelektrode von den Strom- und Kühlmittelanschlüssen abschließen und aus der Tragvorrichtung entfernen und eine zweite, bereits in kaltem Zustand mit einer angenippelten Graphitelektrode versehene Dauerelektrode in die Tragvorrichtung einspannen und an den Kühlmittelkreislauf und die Stromversorgung anschließen. Die vorher eingesetzte Dauerelektrode konnte dann während des nächsten Ofeneinstazes nach ihrer Abkühlung mit einem neuen Elektrodenteilstück versehen und der zuvor abgenippelte, noch unverbrauchte Elektrodenrest dann an das neue Teilstück mittels eines üblichen Schraubnippels aus Graphit unten wieder angenippelt werden. Wenn man für dieses Ab- und Annippeln der erkalteten Dauerelektrode auch einfache Vorrichtungen zur Verfügung hat, so ist mit der beschriebenen Handhabung doch ein den Vorteil der Dauerelektrode mindernder Nachteil verbunden.

Der Erfindung liegt die Aufgabe zugrunde, eine Vorrichtung zum Annippeln einer Graphitelektrode von unten an eine Dauerelektrode zu schaffen mit der auch von einer unmittelbar nach einem Ofeneinsatz noch in der zugeordneten Tragvorrichtung gehaltenen und an ihren Kühlmittelkreislauf angeschlossenen, noch entsprechend heißen Dauerelektrode der Elektrodenrest aus Graphit abgeschraubt und ein neues Teilstück einer Graphitelektrode sogleich, beispielsweise in der kurzen Zeit während eines Chargenwechsels, angenippelt werden kann.

Die gestellte Aufgabe ist erfindungsgemäß, ausgehend von einer Vorrichtung gemäß der Gattung des Patentanspruchs 1 durch die im kennzeichnenden Teil dieses Anspruchs wiedergegebene Lehre gelöst.

Damit ist erstmals eine zum unteren Annippeln von Graphitelektroden an noch heiße Elektroden geeignete Vorrichtung geschaffen worden, die sich auch von den bekannten Vorrichtungen zum oberen Annippeln von Elektrodenteilstücken nicht nur durch eine geänderte Anordnung der Einspannvorrichtungen, sondern noch dadurch unterscheidet, daß ein die Elektrode umgebendes Gehäuse den axialen Aufnahmeraum für die Elektrode mit einer im wesentlichen geschlossenen sowie doppelwandig ausgebildeten und mittels eines Kühlmittels gekühlten Innenwand umschließt, wodurch die Möglichkeit geschaffen ist, die Vorrichtung auch an einer gerade erst aus einem Elektroofen entnommenen und noch entsprechend heißen Elektrode einzusetzen. Dabei kann das die Vorrichtung tragende Gehäuse entweder auf einem Zwischengestell oder auf einer entsprechende Ausnehmung für die Graphitelektrode aufweisenden Zwischenboden eines Gebäudes fest angeordnet oder aber auch an einem Manipulator festgehalten sein, mit dem auch die Lage des Gehäuses relativ zur Dauerelektrode ausgerichtet werden kann.

Eine besonders vorteilhafte Ausgestaltung der Erfindung ist in Anspruch 3 gekennzeichnet, da sich durch ein solches die Einspannvorrichtungen einschließendes und entlang allen seinen Wänden gekühltes Gehäuse nicht nur ein wirksamer Schutz der Einspannvorrichtungen vor einer überhöhten Temperaturbeanspruchung, sondern zugleich ein willkommener Schutz dieser Vorrichtungen vor Staub und Schmutz ergibt.

Andere vorteilhafte Ausgestaltungen der Erfindung sind in den weiteren Unteransprüchen gekennzeichnet.

In der Zeichnung ist die Erfindung beispielsweise veranschaulicht ; es zeigen :

Figur 1 eine gemeinsam mit dem Deckel eines Elektroofens aus dem Ofen herausgehobene Dauerelektrode, die mit einem Rest einer angenippelten Graphitelektrode in das Gehäuse der Annippelvorrichtung so eintaucht, daß anschließend das Abnippeln des Elektrodenrestes und das Annippeln einer neuen Graphitelektrode erfolgen kann, in einer schematisch gehaltenen Seitenansicht (teilweise im Schnitt) ;

Figur 2 die Annippelvorrichtung gemäß Fig. 1 in einer Draufsicht ;

Figur 3 eine der Fig. 2 entsprechende Teilansicht der Vorrichtung bei abgenommenem Deckel (in gegenüber Fig. 2 vergrößertem Maßstab) ;

Figur 4 dieselbe Vorrichtung in einem Längsschnitt nach der Linie IV-IV der Fig. 2 (im Maßstab der Fig. 3) ;

Figur 5 in gleichem Maßstab einen Teilquerschnitt der Vorrichtung nach der Linie V-V der Fig. 4 ;

Figur 6 in gleichem Maßstab einen Teilquerschnitt der Vorrichtung nach der Linie VI-VI der Fig. 4 ;

Figur 7 in gleichem Maßstab einen Teillängsschnitt der Vorrichtung nach der Linie VII-VII der Fig. 6 ;

Figur 8 einen Teilquerschnitt der Vorrichtung nach der Linie VIII-VIII der Fig. 7 ;

Figur 9 einen Teillängsschnitt der Vorrichtung nach der Linie IX-IX der Fig. 8 ;

Figur 10 einen Teillängsschnitt der Vorrichtung (in Umfangsrichtung abgewickelt) nach der Linie X-X der Fig. 8 ;

Figur 11 einen Teillängsschnitt der Vorrichtung nach der Linie XI-XI der Fig. 8 ;

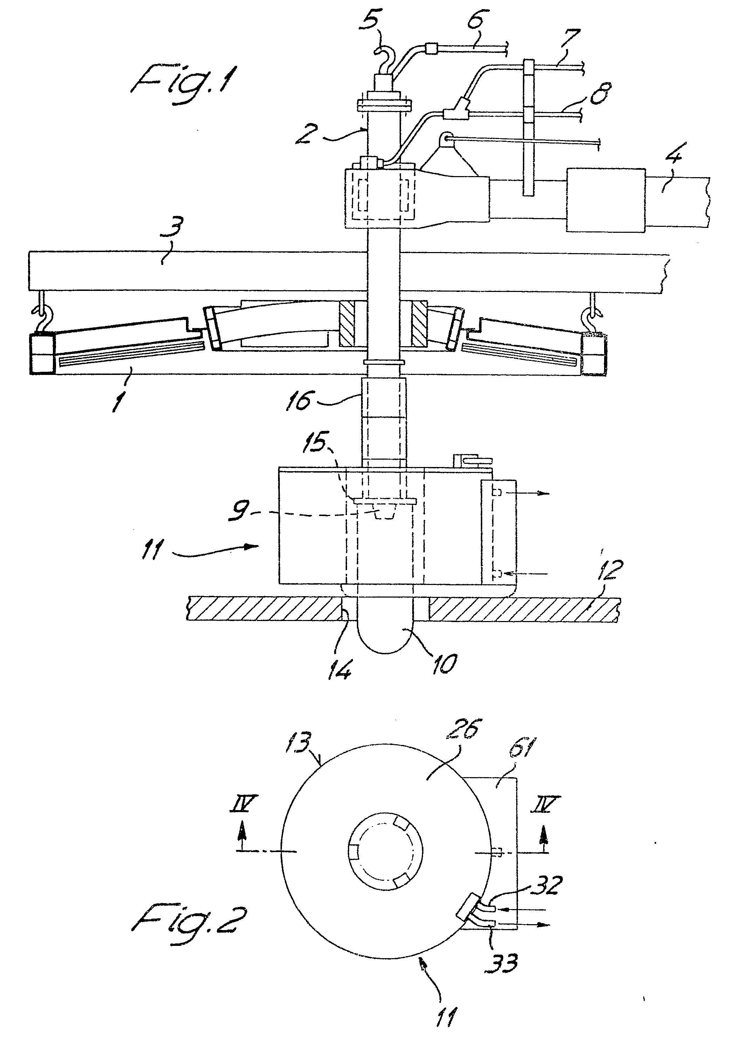

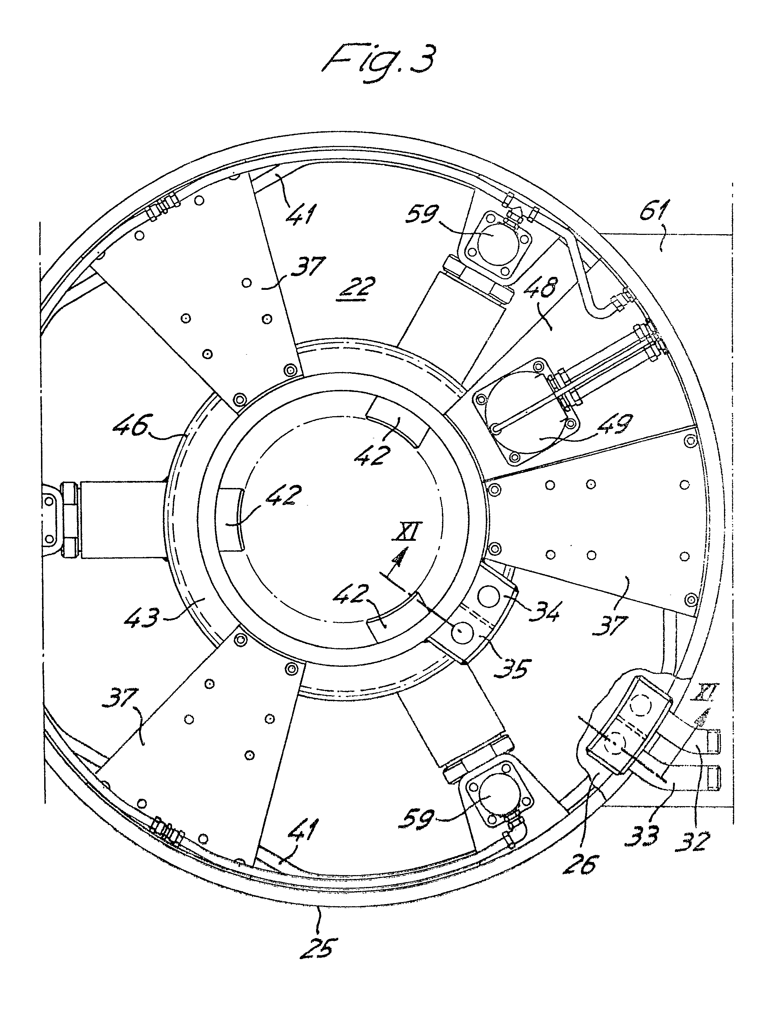

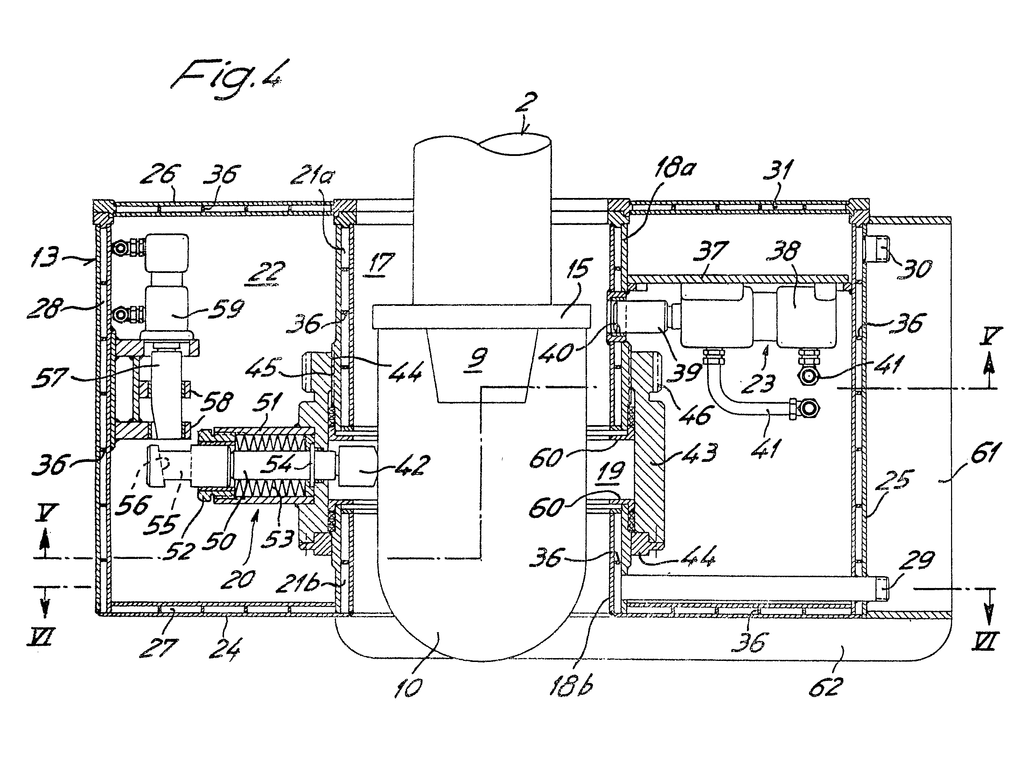

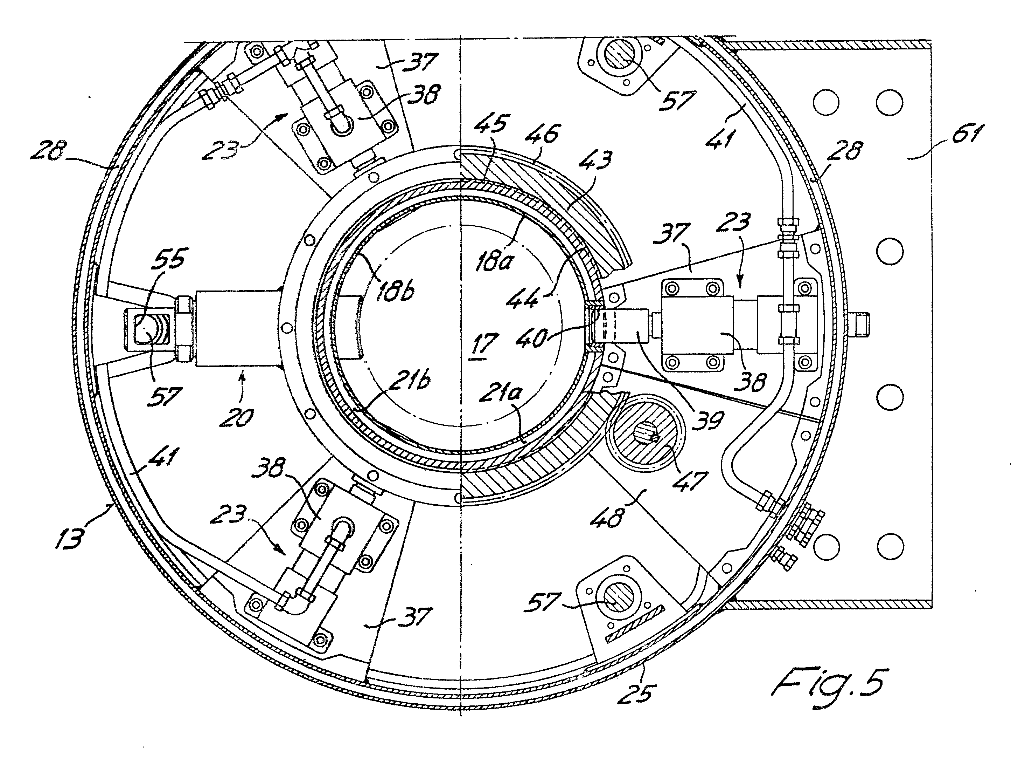

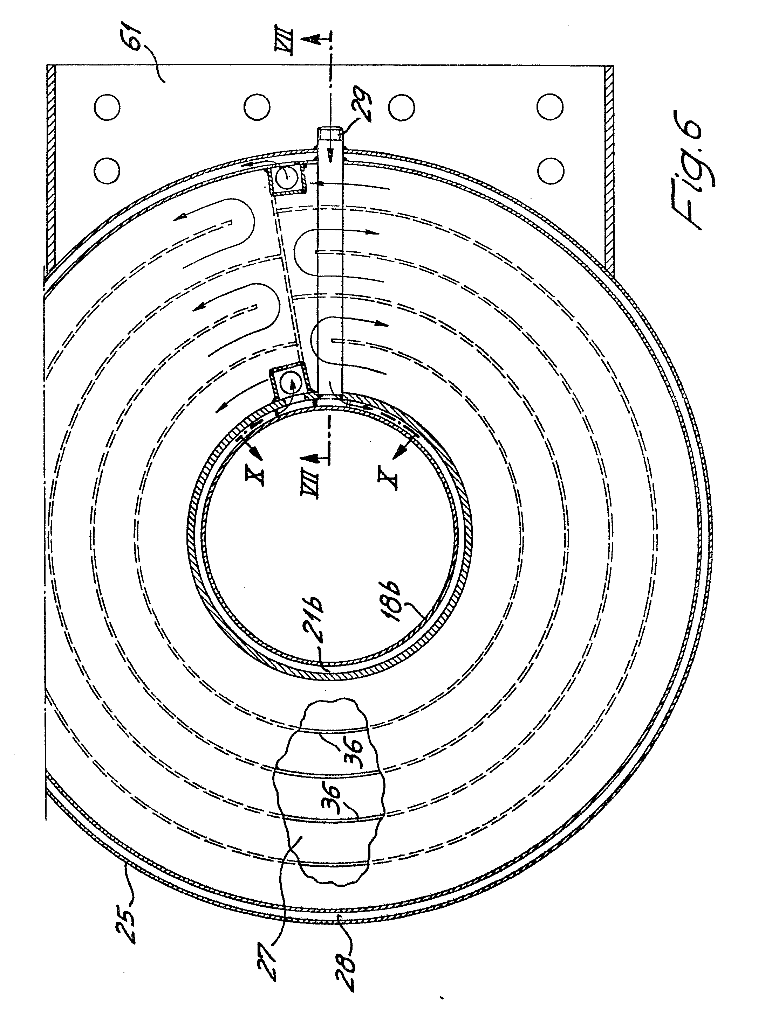

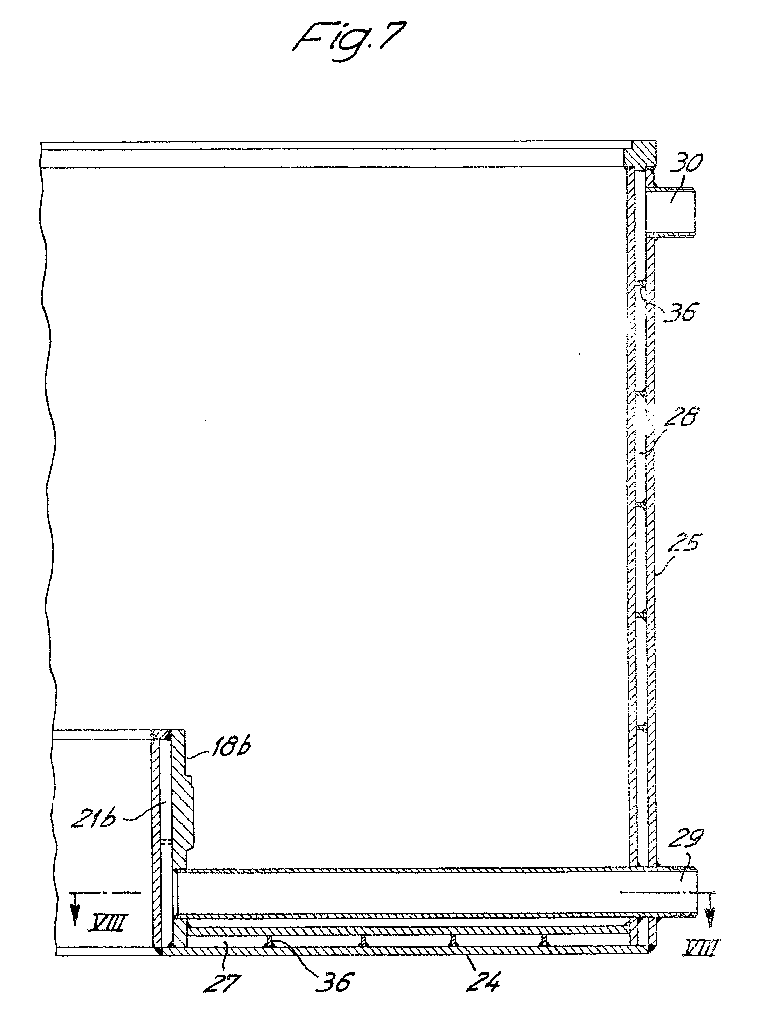

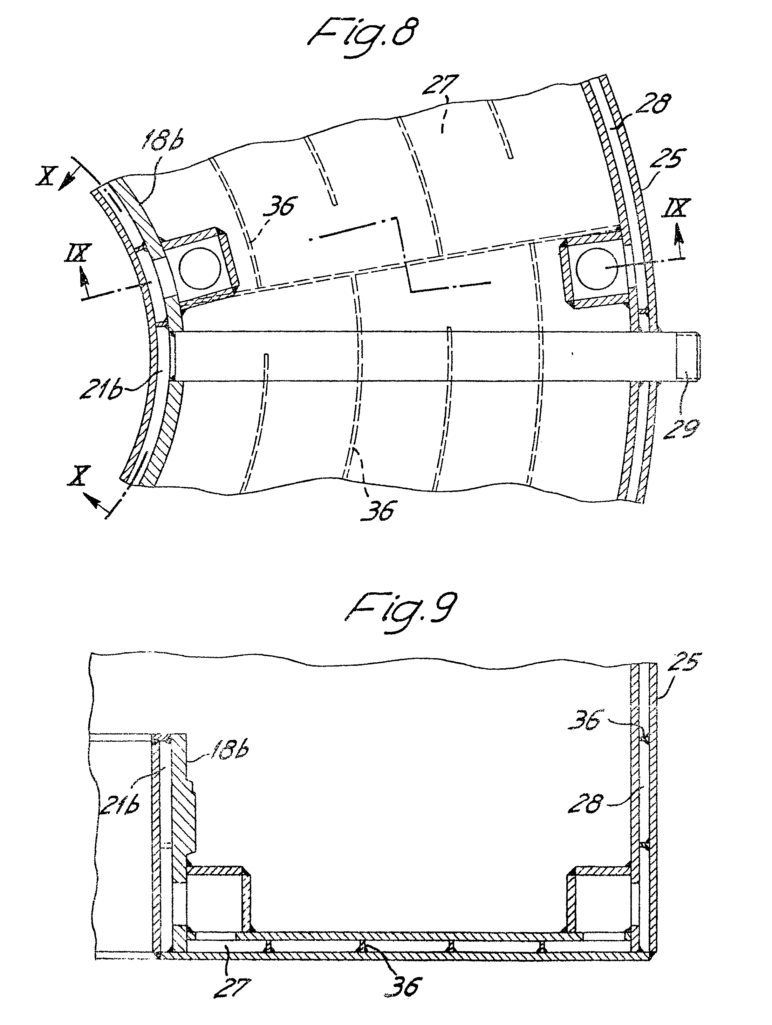

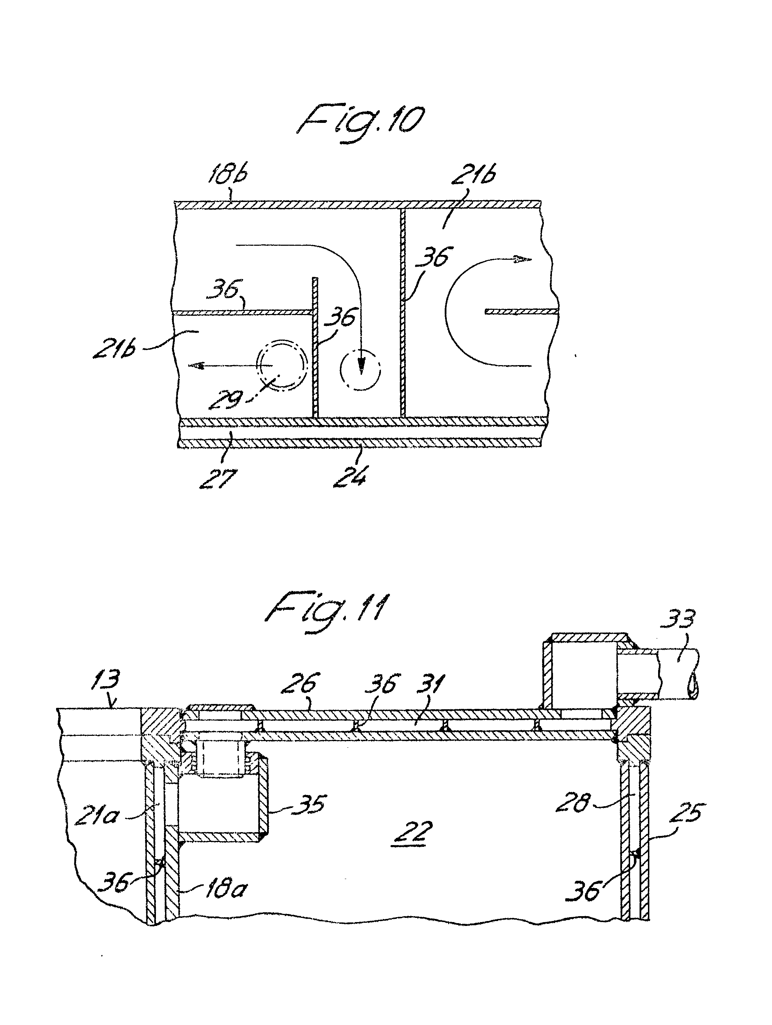

Das Ausführungsbeispiel zeigt in Fig. 1 eine aus einem (nicht dargestellten) Elektroofen gemeinsam mit dessen Deckel 1 herausgehobene Dauerelektrode 2, wobei der Deckel 1 an einem in üblicher Weise ausschwenkbaren Auslegearm 3 und die Dauerelektrode 2 lotrecht hängend an einer Tragvorrichtung 4 eingespannt ist und außerdem in deren Freigabestellung von einer an einem oberen Haken 5 angreifenden (nicht dargestellten) Kranaufhängung her axial versetzt werden kann.

Die Dauerelektrode 2 ist oben außerdem an ein Kabel 6 einer üblichen Stromversorgung und die Tragvorrichtung 4 mittels Leitungen 7 und 8 an einen Kühlwasserkreislauf angeschlossen, der in üblicher Weise zugleich die aus Kupfer oder einem ähnlichen gut leitenden Metall hergestellte Dauerelektrode 2 innen kühlt.

Die Dauerelektrode 2 trägt an ihrem unteren, mit einem ebenfalls aus Metall bestehenden Schraubnippel 9 versehenen Ende den Rest eines im übrigen beim vorangegangenen Ofenbetrieb nahezu verbrauchten, an den Schraubnippel 9 angeschraubten Teilstückes 10 einer Graphitelektrode und taucht mit diesem Teilstück 10 in eine Annippelvorrichtung 11 ein, die gemäß dem Ausführungsbeispiel auf einem boden 12 eines im übrigen nicht dargestellten Gebäudes aufruht. Der Boden 12 weist axial unterhalb eines ringförmigen Gehäuses 13 der Annippelvorrichtung 11 eine Öffnung 14 auf, durch die das mittels der Annippelvorrichtung 11 in nachstehend noch beschriebener Weise abgeschraubte Teilstück 10 nach unten entfernt und durch ein neues Teilstück ersetzt werden kann. Auf einem Außenbund 15 des Schraubnippels 9 sind gemäß Fig. 1 noch einige die Dauerelektrode 2 umgebende Keramikringe 16 abgestützt, die nach außen hin eine Wärmeisolierung der vom vorherigen Betrieb des Elektroofens her noch heißen Elektrode bewirken.

Wie insbesondere aus den Fig. 3 bis 5 hervorgeht, ist eine die Dauerelektrode 2 nebst Schraubnippel 9, Außenbund 15 und Teilstück 10 in einer entsprechenden Ausnehmung 17 konzentrisch umgebende zylindrische Innenwand des Gehäuses 13 in zwei axial mit Abstand aufeinanderfolgende Teile 18a und 18b unterteilt, die zwischen sich einen Spaltraum 19 zur Aufnahme von Bestandteilen einer nachstehend noch erläuterten unteren Einspannvorrichtung 20 zum Einspannen eines Teilstückes 10 einer Graphitelektrode frei lassen. Die Teile 18a und 18b der Innenwand sind beide doppelwandig ausgebildet und ihre Hohlräume 21a und 21b bilden jeweils Bestandteil eines nachstehend noch erläurterten Kühlwasserkreislaufes.

Das ringförmige Gehäuse 13 schließt in dem die Innenwand 18a, 18b umgebenden Ringraum 22 außer der unteren Einspannvorrichtung 20 auch noch eine obere Einspannvorrichtung 23 ein und in der insbesondere aus Fig. 4 ersichtlichen Weise sind auch alle weiteren Gehäusewände, nämlich ein ringförmiger Boden 24, eine zylindrische Außenwand 25 und ein ringförmiger Deckel 26 des Gehäuses 13 doppelwandig ausgebildet, wobei in nachstehend noch erläuterter Weise die Hohlräume 27 und 28 des Bodens 24 und der Außenwand 25 gemeinsam mit dem Hohlraum 21b des unteren Teiles 18b der Innenwand in nachstehend noch näher erläuterter Weise an einen Zulaufstutzen 29 und einen Ablaufstutzen 30 eines ersten (im übrigen nicht dargestellten) Kühlwasserkreislaufes und der Hohlraum 31 des Deckels 26 gemeinsam mit dem Hohlraum 21a des oberen Teiles 18a der Innenwand in ebenfalls nachstehend noch erläuterter Weise an einen Zulaufstutzen 32 und einen Ablaufstutzen 33 eines zweiten Kühlwasserkreislaufes angeschlossen sind. Beide letztgenannten Stutzen sind in der aus den Fig. 1 bis 3 ersichtlichen Weise am Deckel 26 des Gehäuses 13 angeordnet. Im übrigen ist der Deckel 26 durch entlang seinem Außenumfang und seinem Innenumfang verteilt angeordnete (nicht dargestellte) Schraubmittel mit den nach unten anschließenden Wandteilen dicht verschraubt, so daß die beiden Einspannvorrichtungen 20 und 23 normalerweise gegenüber dem Außenraum praktisch dicht abgeschlossen, gewünschtenfalls nach Abnahme des Deckels 26 aber auch zugänglich sind.

Wie aus den Fig. 4, 6 und 7 hervorgeht, strömt das durch den Zulaufstutzen 29 einströmende Kühlwasser zunächst durch den Hohlraum 21b im unteren Teil 18b der Innenwand, sodann durch den Hohlraum 27 des Bodens 24 und daraufhin in den Hohlraum 28 der Außenwand, um an einer oberen Umfangsstelle derselben durch den Ablaufstutzen 30 auszuströmen. In ähnlicher Weise ist aus den Fig. 3 und 11 zu entnehmen, daß das durch den Zulaufstutzen 32 in den Hohlraum 31 des Deckels 26 gelangte Kühlwasser an einer Überströmstelle 34 (vgl. Fig. 3) in den Hohlraum 21a des oberen Teiles 18a der Innenwand und aus demselben an einer weiteren Überströmstelle 35 (vgl. Fig. 3 und 11) wieder in den Deckel 26 und von dort schließlich zum Ablaufstutzen 33 des zugeordneten Kühlwasserkreislaufes gelangt.

Im übrigen ist aus den Fig. 4 sowie 6 bis 11 ersichtlich, daß alle Hohlräume 21a, 21b, 27, 28 und 31 der Gehäusewandungen durch Zwischenwände 36 zu labyrinthförmig verlaufenden Kühlkanälen ausgestaltet sind, womit gewährleistet wird, daß das Kühlwasser beim Betrieb der Annippelvorrichtung 11 die genannten Hohlräume überall mit einer ausreichenden Geschwindigkeit durchströmt und damit die Gefahr einer örtlichen Überhitzung und Dampfblasenbildung von Kühlwasser an sonst etwa unbewegten Wasserstellen vermieden wird.

Die obere Einspannvorrichtung 23 besteht aus drei im oberen Teil des Ringraumes 22 entlang dessen Umfang gleichmäßig verteilten und an je einer Tragplatte 37 des Gehäuses 13 festgelegten Kolben-Zylindereinheiten 38, deren radial zum Gehäuse 13 einwärts verschiebbare Kolben an ihren freien Enden je eine Spannbacke 39 tragen, die durch eine in einem zugeordneten Loch des oberen Teils 18a der Innenwand zugleich gegenüber deren Hohlraum 21a abgedichtet festgelegte Buchse 40 in den axialen Aufnahmeraum 17 so weit vorschiebbar ist, daß beim gleichzeitigen Vorschieben aller drei Spannbacken 39 die gemäß Fig. 4 mit dem Außenbund 15 ihres Schraubnippels 9 gerade bis in die Querebene der Spannbacken 39 eingebrachte Dauerelektrode 2 festgespannt werden kann. Wie auch aus Fig. 5 ersichtlich ist, sind die Kolben-Zylindereinheiten 38 über ein Leitungssystem 41 in üblicher, nicht besonders dargestellter Weise hydraulisch im Sinne einer Einspannung der Dauerelektrode 2 und natürlich auch im Sinne deren Freigabe betätigbar. Dabei können die Spannbacken 39 auch in ihrer zurückgezogenen Stellung stets innerhalb der zugeordneten Buchse 40 dicht geführt verbleiben, so daß der Ringraum 22 auch an diesen Stellen des oberen Teils 18a der Innenwand gegenüber dem heißen Aufnahmeraum 17 stets wirksam abgeschirmt bleibt.

Wie aus den Fig. 3 bis 5 hervorgeht, greift die untere Einspannvorrichtung 20 mit drei in Umfangsrichtung des Ringraumes 22 gleichmäßig verteilt angeordneten Spannbacken 42 in den Spaltraum 19 zwischen dem oberen Teil 18a und dem unteren Teil 18b der Innenwand ein. Da die Spannbacken 42 zum Abschrauben des zunächst noch am Schraubnippel 9 festgelegten Teilstückes 10 einer Graphitelektrode in ihrer Spannstellung gemeinsam mit dem Teilstück 10 gedreht und zugleich nach unten verschraubt werden müssen, sind sie gemeinsam an einem zylindrischen Drehkörper 43 geführt, der in axialer Richtung über den Spaltraum 19 hinaus sowohl den oberen Teil 18a als auch den unteren Teil 18b der Innenwand übergreift. Unten ist der Drehkörper 43 mit einem inneren Führungsring 44 auf dem Teil 18b geführt, während er oben mit einem Innengewinde 44 in ein dortiges Außengewinde 45 des oberen Teils 18a der Innenwand eingreift. Die Steigung dieser beiden Gewinde stimmt mit der Steigung des Schraubnippels 9 überein, so daß durch ein entsprechendes Drehen des Drehkörpers 43 bei das Teilstück 10 der Graphitelektrode einspannenden Spannbacken 42 und bei zugleich durch die obere Einspannvorrichtung 23 über ihren Außenbund 15 festgehaltener Dauerelektrode 2 das Teilstück 10 vom Schraubnippel 9 abgeschraubt wird. Da bei den Schraubnippelgewinden, wie sie zum Zusammenschrauben aufeinanderfolgender Teilstücke 10 von Graphitelektroden üblich sind, zum Festschrauben eines Teilstückes 10 annähernd vier Umdrehungen erforderlich sind, muß auch der Drehkörper 43 vier Umdrehungen verschraubbar und der Spaltraum 19 so breit sein, daß die Spannbacken 42 während dieser Verschraubung die entsprechende axiale Verschiebung erfahren können. Zur Bewerkstelligung der erforderlichen Verschraubung des Drehkörpers 43 ist derselbe an seinem oberen Ende mit einem äußeren Zahnkranz 46 versehen, in den ein Abtriebsritzel 47 (vgl. Fig. 5) eines an einer weiteren Tragplatte 48 des Gehäuses 13 festgelegten und in Fig. 3 von oben sichtbaren reversierbaren Antriebsmotors 49 eingreift. Gemäß dem Ausführungsbeispiel ist auch der Antriebsmotor 49 hydraulisch betätigbar.

Wie weiterhin aus Fig. 4 ersichtlich ist, durchsetzt jede Spannbacke 42 den Drehkörper 43 mittels einer Kolbenstange 50 nach außen in den Ringraum 22 hinein, während eine die Kolbenstange 50 konzentrisch umgebende, innen am Drehkörper 43 festgelegte Hülse 51 außen eine innere Führungsbuchse 52 für die Kolbenstange 50 trägt, an der eine die Kolbenstage 50 umgebende Federsäule 53 einerseits abgestützt ist. Durch die anderseits an einem Außenbund 54 der Kolbenstange 50 abgestützte Federsäule 53 wird die Kolbenstange 50 und damit die Spannbacke 42 stets mit einer bestimmten, zum Festspannen einer Graphitelektrode ausreichenden Spannkraft in den Aufnahmeraum 17 hinein vorgespannt.

Der Arbeitsbereich des reversierbaren Antriebsmotors 38 ist so ausgelegt, daß er den Drehkörper 43 von einer ganz bestimmten Ausgangswinkelstellung her gerade um genau vier Umdrehungen oder um ein ganzzahliges Vielfaches des Winkelabstandes der Spannbacken verschrauben kann, so daß auch die Kolbenstangen 50 nach ihrer entsprechenden axialen Verschraubung wieder genau dieselbe Winkelstellung einnehmen, und zwar sowohl in der einen als auch in der anderen Schraubrichtung. Auf diese Weise ist es möglich, vor und nach jeder Verschraubung die Spannbacken 42 über an den äußeren Enden der Kolbenstangen 50 befindliche und aus den Fig. 4 und 5 ersichtliche, achsparallel zum Gehäuse 13 verlaufende Schlitze 55 mit schräg verlaufenden Außenwänden 56 und über je einen Keil 57 von ihren dargestellten Einspannstellungen aus radial zum Gehäuse 13 nach außen zurückzuziehen.

Aus den Fig. 4 und 5 geht auch hervor, wie jeder Keil 57 durch oberhalb der Kolbenstangen 50 am Gehäuse 13 befindliche Führungen 58 aus der dargestellten Ausgangsstellung achsparallel zum Gehäuse 13 nach unten verschiebbar und wieder zurückziehbar ist. Dabei dient zum Antrieb jedes Keiles 57 eine an dessen oberem Ende angreifende und mit ihrem Zylinder am Gehäuse 13 festgelegte Kolben-Zylindereinheit 59, die ebenfalls hydraulisch betätigbar ist.

Damit der Ringraum 22 und insbesondere die ineinandergreifenden Innen- und Außengewinde 44, 45 am oberen Ende des Drehkörpers 43 trotz dessen Verdrehbarkeit vor Staub und Schmutz aus dem axialen Aufnahmeraum 17 des Gehäuses bewahrt bleiben, sind die beiderseits des Spaltraumes 19 nach oben und unten anschließenden Ringspalte zwischen dem Drehkörper 43 und den beiden Teilen 18a und 18b der Innenwand mittels je einer geteilten Stopfbuchse 60 abgedichtet.

Wie aus den Fig. 1 bis 6 weiterhin ersichtlich ist, ist das Gehäuse 13 an seiner einen Seite noch mit einem Rahmenansatz 61 versehen, von dessen Unterseite aus zwei Kufen 62 beiderseits des axialen Aufnahmeraumes 17 unter den Boden 24 des Gehäuses 13 greifen. Über den Rahmenansatz 61 kann die Annippelvorrichtung 11 gewünschtenfalls an einem Manipulator od. dgl. Tragvorrichtung festgelegt werden, während die Kufen 62 das Gehäuse 13 schützende Stützfüße bilden.

Aus der vorstehenden Beschreibung geht ohne weiteres hervor, daß das von der Dauerelektrode 2 her in den Aufnahmeraum 17 eingebrachte restliche Teilstück 10 einer Graphitelektrode dadurch von den Spannbacken 42 am Drehkörper 43 festgespannt werden kann, daß die zunächst in ihren unteren, in die Schlitze 55 eingreifenden Endstellungen befindlichen Keile 57 über ihre Kolben-Zylindereinheiten 59 aus den Schlitzen 55 nach oben in die aus Fig. 4 ersichtlichen Freigabestellungen hochgezogen werden. Daraufhin wird der Drehkörper 43 bei über die obere Einspannvorrichtung 23 und den Außenbund 15 des Schraubnippels 9 festgehaltener Dauerelektrode 2 um genau vier Umdrehungen nach unten verschraubt, wodurch das Teilstück 10 vom Schraubnippel 9 abgeschraubt ist. Nunmehr werden die Keile 57 erneut aus ihren in Fig. 4 dargestellten Freigabestellungen nach unten in die Schlitze 55 hinein verschoben, wodurch die Spannbacken 42 das Teilstück 10 freigeben, das nach unten, beispielsweise in eine geeignete Aufnahmewanne, herabfällt. Nunmehr wird ein übliches neues Teilstück einer Graphitelektrode mittels eines üblichen Manipulators od. dgl. von unten in den Aufnahmeraum 17 eingebracht, bis es am Schraubnippel 9 der Dauerelektrode 2 anliegt. Daraufhin werden die Keile 57 nach oben in ihre Freigabestellungen zurückgezogen, so daß nunmehr das neue Elektrodenteilstück am Drehkörper 43 axial festgespannt ist. Ein erneuter Antrieb des Antriebsmotors 49 bewirkt ein Wiederhochschrauben des Drehkörpers 43 um genau vier Umdrehungen, obgleich zum festen Anschrauben eines Elektrodenteilstückes in der Regel keine vollen vier Umdrehungen erforderlich sind. Da die Spannbacken 42 auf das Elektrodenteilstück über die Federsäulen 53 nur einen begrenzten Einspanndruck ausüben, kann der Drehkörper 43 nach beendetem Festschrauben des Elektrodenteilstückes trotzdem die vollständigen vier Umdrehungen hochgeschraubt werden, wobei dann die Spannbacken 42 lediglich über einen entsprechenden Schraubweg über das Elektrodenteilstück gleiten.

Schließlich kann das zuvor abgenommene weitgehend verbrauchte Teilstück 10 zu seinem vollständigen Verbrauch erneut an die Elektrode, und zwar nunmehr an das untere Ende des neuen Elektrodenteilstückes angeschraubt werden. Hierzu wird die Dauerelektrode 2 gemeinsam mit dem neuen Elektrodenteilstück zunächst bei in ihre Freigabestellung gebrachten Einspannvorrichtungen über den oberen Haken 5 der Dauerelektrode 2 so weit hochgezogen, daß nunmehr das neue Elektrodenteilstück mit einem üblichen unteren Schraubnippel aus Graphit oder Kohle etwa die gleiche Stellung einnimmt, wie es in Fig. 4 für den Schraubnippel 9 der Dauerelektrode 2 dargestellt ist. Daraufhin kann dann das restliche Teilstück 10 der Graphitelektrode an das untere Ende des mit der Dauerelektrode 2 bereits verbundenen neuen Elektrodenteilstückes in gleicher Weise von unten angeschraubt werden, wie es zuvor für das neue Elektrodenteilstück erfolgt war und vorstehend bereits beschrieben wurde.

**Ansprüche**

1. Vorrichtung zum Annippeln einer Graphitelektrode von unten an eine axial versetzbar von einer Tragvorrichtung eines Elektroofens getragene Dauerelektrode die an einem unteren Schraubnippel einen Rest einer verbrauchten Graphitelektrode trägt, gekennzeichnet durch ein die Dauerelektrode (2) im Bereich des Schraubnippels (9) und des anschließenden Teiles (10) der Graphitelektrode umfassendes Gehäuse (13), in dessen oberem Bereich eine obere Einspannvorrichtung (23) für die Dauerelektrode (2) und in dessen unterem Bereich eine in einem ein Ab- und Annippeln einer Graphitelektrode zulassenden axialen Bereich insgesamt um mehr als eine Umdrehung verschraubbare untere Einspannvorrichtung (20) angeordnet ist, und dadurch, daß das Gehäuse (13) den axialen Aufnahmeraum (17) für die Elektrode (2, 10) mit einer bis auf die erforderlichen Spannmittel- Ausnehmungen (Buchsen 40, Spaltraum 19) geschlossenen zylindrischen Innenwand (18a, 18b) umschließt, die doppelwandig ausgebildet und mit ihrem Hohlraum (21a, 21b) an eine Kühlmittelversorgung angeschlossen ist.

2. Vorrichtung nach Anspruch 1, dadurch gekennzeichnet, daß die Innenwand (18a, 18b) zugleich die Innenwand eines die beiden Einspannvorrichtungen (23, 20) aufnehmenden und nach außen dicht abgeschlossenen Ringraumes (22) des Gehäuses (13) ist.

3. Vorrichtung nach Anspruch 1 oder 2, dadurch gekennzeichnet, daß die Stirn- und Außenwände (24, 25, 26) des Gehäuses (13) doppelwandig ausgebildet und an ein Kühlsystem angeschlossen sind.

4. Vorrichtung nach Ansprunch 2 oder 3, dadurch gekennzeichnet, daß das Gehäuse (13) aus einem unterren Gehäuseteil, das aus einem Boden (24), einer Außenwand (25) und dem unterhalb der unteren Einspannvorrichtung (20) befindlichen Teil (18b), de Innenwand gebildet ist, und aus einem oberen Gehäuseteil, das aus einem Deckel (26) und dem oberhalb der unteren Einspannvorrichtung (20) befindlichen Teil (18a) der Innenwand gebildet ist, lösbar zusammengesetzt ist.

5. Vorrichtung nach Ansprunch 4, dadurch gekennzeichnet, daß das obere Gehäuseteil und das untere Gehäuseteil jeweils ein mit je einem Zu- und Ablaufstutzen (32, 33 bzw. 29, 30) versehenes Kühlsystem bilden.

6. Vorrichtung nach einem der Ansprüche 1 bis 5, dadurch gekennzeichnet, daß jeder an ein Kühlsystem angeschlossene Hohlraum (21a, 21b, 27, 28, 31) einer Doppelwand des Gehäuses (13) durch Zwischenwände (36) zu einem Kühlkanal ausgestaltet ist.

7. Vorrichtung nach einem der Ansprüche 1 bis 6, darduch gekennzeichnet, daß die Spannbacken (39) der oberen Einspannvorrichtung (23) in angepaßten Buchsen (40) der Innenwand (18a) des Gehäuses (13) dicht geführt sind.

8. Vorrichtung nach einem der Ansprüche 1 bis 7, dadurch gekennzeichnet, daß die Spannbacken (39) der oberen Einspannvorrichtung (23) durch je eine mit ihrem Zylinder im Gehäuse (13) festgelegte Kolben-Zylindereinheit (38) hydraulisch betätigbar sind.

9. Vorrichtung nach einem der Ansprüche 1 bis 8, dadurch gekennzeichnet, daß die Spannbacken (42) der unteren Einspannvorrichtung (20) radial verschiebbar in einem die Innenwand (18a, 18b) umgebenden und beiderseits von deren ringförmiger Durchbrechung (Spaltraum 19) an derselben dicht geführten Drehkörper (43) geführt sind, der mit einem Innengewinde (44) in ein an der Innenwand befindliches Anßengewinde (45) und mit einem äußere Zahnkranz (46) in das Abtriebsritzel (47) eines im Gehäuse (13) ortsfest gelagerten reversierbaren Antriebsmotors (49) eingreift.

10. Vorrichtung nach Anspruch 9, dadurch gekennzeichnet, daß der Antriebsmotor (49) hydraulisch betätigbar ist.

11. Vorrichtung nach Anspruch 9 oder 10, dadurch gekennzeichnet, daß die Spannbacken (42) der unteren Einspannvorrichtung (20) durch je eine am Drehkörper (43) angeordnete Federsäule (53) in ihre Spannstellung vorgespannt sind und im Gehäuse (13) gleichen Winkelstellungen wie die Spannbacken (42) je ein im Gehäuse (13) achsparallel zur Elektrodenachse verschiebbar geführter Keil (57) vorgesehen ist, der bei beiden Endstellungen der Spannbacken (42) im Sinne deren radialer Zurückziehung von der Graphitelektrode (Teilstück 10) entgegen der Kraft der Federsäule (53) verschiebbar ist.

12. Vorrichtung nach Anspruch 11, dadurch gekennzeichnet, daß die Keile (57) mittels je einer mit ihrem Zylinder im Gehäuse (13) festgelegten Kolben-Zylindereinheit (59) hydraulisch verschiebbar sind.

13. Vorrichtung nach einem der Ansprüche 1 bis 12, dadurch gekennzeichnet, daß das Gehäuse (13) an einer äußeren Umfangsstelle einen Rahmenansatz (61) aufweist.

14. Vorrichtung nach einem der Ansprüche 1 bis 13, dadurch gekennzeichnet, daß das Gehäuse (13) an seiner Unterseite zwei Kufen (62) aufweist.

**Claims**

1. Apparatus for connecting a graphique electrode from below by nipple means to a permanent electrode which is axially displaceably carried by a carrier device of an electric furnace and which carries a residual portion of a consumed graphique electrode on a lower screw nipple, characterised by a housing (13) which is disposed around the permanent electrode (2) in the region of the screw nipple (9) and the adjoining portion (10) of the graphite electrode, an upper clamping means (23) being disposed in the upper region of the housing (13), for the permanent electrode (2), and a lower clamping means (20) being disposed in the lower region of the housing (13), which lower clamping means (20) can be screwed through a total of more than one revolution in an axial region permitting a graphite electrode to be disconnected from and connected to the permanent electrode, and characterised in that the housing (13) encloses the axial space (17) for receiving the electrode (2, 10), with a cylindrical inner wall (18a, 18b) which is closed except for the necessary clamping means openings (bushes 40, gap 19) and which is a double-walled construction and which is connected with its hollow space (21a, 21b) to a coolant supply.

2. Apparatus according to claim 1, characterised in that the inner wall (18a, 18b) is also the inner wall of an annular space (22) of the housing (13), which annular space accomodates the two clamping means (23, 20) and is sealingly closed with respect to the exterior.

3. Apparatus according to claim 1 or claim 2, characterised in that the outside and end walls (24, 25, 26) of the housing (13) are of a double-walled construction and are connected to a cooling system.

4. Apparatus according to claim 2 or claim 3, characterised in that the housing (13) releasably comprises a lower housing part which is formed from a bottom portion (24), an outer wall (25) and the portion (18b) of the inner wall, which is disposed below the lower clamping means (20), and an upper housing part which is formed from a cover (26) and the portion (18a) of the inner wall, which is disposed above the lower clamping means (20).

5. Apparatus according to claim 4, characterised in that the upper housing part and the lower housing par each form a respective cooling system each provided with a feed connection and a discharge connection (32, 33 and 29, 30 respectively).

6. Apparatus according to one of claims 1 to 5, characterised in that each hollow space (21a, 21b, 27, 28, 31) of a double wall of the housing (13), which is connected to a cooling system, has partitioning walls (36), to form a cooling duct.

7. Apparatus according to one of claims 1 to 6, characterised in that the clamping jaws (39) of the upper clamping means (23) are sealingly guided in suitable bushes (40) of the inner wall (18a) of the housing (13).

8. Apparatus according to one of claims 1 to 7, characterised in that the clamping jaws (39) of the upper clamping means (23) are hydraulically actuable by a respective piston cylinder unit (38) with ist cylinder fixed in the housing (13).

9. Apparatus according to one of claims 1 to 8, characterised in that the clamping jaws (42) of the lower clamping means (20) are radially displaceably guided in a rotary member (43) which surrounds the inner wall (18a, 18b) and which is fluid-tightly guided thereon on both sides of the annular aperture (gap 19) thereof and which engages with a female screwthread (44) into a male screwthread (45) on the inne wall and which engages with an outer ring gear (46) into the drive pinion (47) of a reversible drive motor (49) which is disposed at a stationary location in the housing (13).

10. Apparatus according to claim 9, characterised in that the drive motor (49) is hydraulically actuable.

11. Apparatus according to claim 9 or claim 10, characterised in that the clamping jaws (42) of the lower clamping means (20) are biased into their clamping position by a respective spring column (53) arranged on the rotary member (43), and disposed in the housing (13) at the same angular positions as the clamping jaws (42) is a respective wedge member (57) which is guided displaceably in the housing (13) in a direction parallel to the electrode axis and which, in both limit positions of the clamping jaws (42), is displaceable in the direction of radial retraction movement thereof from the graphite electrode (portion 10) against the force of the spring column (53).

12. Apparatus according to claim 11, characterised in that the wedge members (57) are hydraulically displaceable by means of a respective piston-cylinder unit (59) with its cylinder fixed in the housing (13).

13. Apparatus according to one of claims 1 to 12, characterised in that the housing (13) has a frame attachment (61) at an outer peripheral location.

14. Apparatus according to one of claims 1 to 13, characterised in that the housing has two skids (62) on its underside.

**Revendications**

1. Dispositif pour raccorder une électrode en graphite par le bas à une électrode permanente qui est portée, avec possibilité de déplacement axial, par un dispositif porteur d'un four électrique et qui tient, sur un raccord fileté inférieur, un restant d'une électrode en graphique consommée, caractérisé par une enveloppe (13) qui entoure l'électrode permanente (2) dans la région du raccord fileté (9) et de la partie (10) s'y raccordant de l'électrode en graphique, dans la région supérieure de laquelle est monté un dispositif supérieur de blocage (23) de l'électrode permanente (2) et dans la région inférieure de laquelle est monté un dispositif inférieur de blocage (20) susceptible d'être vissé dans son ensemble de plus d'un tour dans une région axiale permettant de faire cesser le raccordement et d'effectuer le raccordement d'une électrode en graphite, et en ce que l'enveloppe (13) entoure la chambre axiale de réception (17) des électrodes (2, 10) par une paroi intérieure (18a, 18b) cylindrique qui est fermée à l'exception des moyens de blocage et de perçages (douille 40, intervalle 19), qui est agencée en parois doubles et dont la chambre (21a, 21b), comprise entre les parois, communique avec une alimentation en agent réfrigérant.

2. Dispositif selon la revendication 1, caractérisé en ce que la paroi intérieure (18a, 18b) est en même temps la paroi intérieure d'une chambre annulaire (22) de l'enveloppe (13), qui reçoit les deux dispositifs de blocage (23, 20) et qui est fermée de manière étanche vis-à-vis de l'extérieur.

3. Dispositif selon la revendication 1 ou 2, caractérisé en ce que les parois frontales et extérieures (24, 25, 26) de l'enveloppe (13) sont agencées en parois doubles et sont raccordées à un système de refroidissement.

4. Dispositif selon la revendication 2 ou 3, caractérisé en ce que l'enveloppe (13) est composée de manière détachable d'une partie inférieure d'enveloppe, formée d'un fond (24) d'une paroi extérieure (25) et de la partie (18b) de la paroi intérieure se trouvant en dessous du dispositif inférieur de blocage (20), et d'une partie supérieure d'enveloppe, formée d'un couvercle (26) et de la partie (18a) de la paroi intérieure se trouvant au-dessus du dispositif inférieur du blocage (20).

5. Dispositif selon la revendication 4, caractérisé en ce que la partie supérieure d'enveloppe et la partie inférieure d'enveloppe forment respectivement un système de refroidissement muni de raccords d'entrée et de sortie (32, 33 et 29, 30).

6. Dispositif selon l'une des revendications 1 à 5, caractérisé en ce que chacune des chambres (21a, 21b, 27, 28, 31) comprises entre les parois doubles de l'enveloppe (13) et raccordées à un système de refroidissement est conformée, par des parois intermédiaires (46), en un canal de refroidissement.

7. Dispositif selon l'une des revendications 1 à 6, caractérisé en ce que les mâchoires de serrage (39) du dispositif supérieur de blocage (23) sont guidées avec étanchéité dans des douilles (40) adaptées de la paroi intérieure (18a) de l'enveloppe.

8. Dispositif selon l'une des revendications 1 à 7, caractérisé en ce que les mâchoires de serrage (39) du dispositif supérieur de blocage (23) peuvent être actionnées hydrauliquement, respectivement par des unités (38) à piston et cylindre fixées à l'enveloppe par leur cylindre.

9. Dispositif selon l'une des revendications 1 à 8, caractérisé en ce que les mâchoires de serrage (42) du dispositif inférieur de blocage (20) sont guidées, avec possibilité de coulissement radial, dans un corps tournant (43) qui entoure la paroi intérieure (18a, 18b), qui, des deux côtés du passage annulaire (intervalle 19), de celle-ci, est guidé de manière étanche sur cette dernière et qui par un taraudage (44), se visse sur un filetage (45) se trouvant sur la paroi intérieure et, par une couronne dentée extérieure (46), engrène dans le pignon de sortie (47) d'un moteur d'entraînement (49) réversible monté à poste fixe.

10. Dispositif selon la revendication 9, caractérisé en ce que le moteur d'entraînement (49) peut être commandé par voie hydraulique.

11. Dispositif selon la revendication 9 ou 10, caractérisé en ce que les mâchoires de serrage (42) du dispositif inférieur de blocage (20) sont mises sous tension préalable en leur position de blocage par respectivement des colonnes à ressort (53) montées sur le corps tournant (43) et dans l'enveloppe (13) sont prévus, en les mêmes positions angulaires que les mâchoires de serrage (42), respectivement des coins (57) qui sont guidés dans l'enveloppe (13) avec possibilité de coulisser parallèlement à l'axe de l'électrode et qui, pour les deux positions d'extrémité des mâchoires de serrage (42), peuvent coulisser, à l'encontre de la force des colonnes à ressort (53) dans le sens de leur retrait radial de l'electrode en graphite (pièce 10).

12. Dispositif selon la revendication 11, caractérisé en ce que les coins (57) peuvent coulisser par voie hydraulique au moyen respectivement d'unités à piston et cylindre (59) fixées à l'enveloppe (13) par leurs cylindres.

13. Dispositif selon l'une des revendications 1 à 12, caractérisé en ce que l'enveloppe (13) présente un prolongement formant cadre (61) sur un emplacement de son pourtour extérieur.

14. Dispositif selon l'une des revendications 1 à 13, caractérisé en ce que l'enveloppe (13) présente deux patins (62) sur son côté inférieur.

*Fig.1*

*Fig.2*

# Fig.3

Fig.4

0 071 107

Fig.5

0 071 107

Fig.6

0 071 107

# Fig.7

30

36

28

25

18b

21b

VIII

29

27    36    24

VIII

Fig.8

Fig.9

Fig.10

Fig.11